# EUROPÄISCHE PATENTSCHRIFT

(11) **EP 1 053 135 B1**
(45) Veröffentlichungstag und Bekanntmachung des Hinweises auf die Patenterteilung: **25.09.2002**
(21) Anmeldenummer: 99906230.0
(22) Anmeldetag: 12.02.1999
(51) Int. Cl.: B60R 21/20

(54) **LENKRAD MIT EINGESTECKTEM AIRBAGMODUL**
STEERING WHEEL WITH INSERTED AIRBAG MODULE
VOLANT POURVU D'UN MODULE AIRBAG ENFICHE

(30) Priorität: 13.02.1998 DE 29802472 U
(43) Veröffentlichungstag der Anmeldung: 22.11.2000
(73) Patentinhaber: TRW Automotive Safety Systems GmbH & Co. KG, 63743 Aschaffenburg (DE)
(72) Erfinder: DERRICK, John, D-97265 Hettstadt (DE)
(74) Vertreter: Degwert, Hartmut, Dipl.-Phys.
(86) Internationale Anmeldenummer: EP9900925
(87) Internationale Veröffentlichungsnummer: WO99041111

(56) Entgegenhaltungen:
- WO-A-98/15431
- DE-U- 29 602 630
- US-A- 5 593 178
- PATENT ABSTRACTS OF JAPAN vol. 097, no. 011, 28. November 1997 & JP 09 183350 A (SENSOR TECHNOL KK), 15. Juli 1997
- PATENT ABSTRACTS OF JAPAN vol. 097, no. 004, 30. April 1997 & JP 08 318806 A (NIPPON SEIKO KK), 3. Dezember 1996

## Beschreibung

Die Erfindung betrifft ein Lenkrad mit einem aus Nabe, Speichen und Lenkradkranz bestehenden Lenkradskelett sowie mit einem darin untergebrachten Airbagmodul, das zur Betätigung der Hupe gegen eine Rückstellkraft um den erforderlichen Kontaktweg parallel zur Lenkradachse verschieblich angeordnet ist, wobei im Lenkradskelett zwei oder mehr nach oben offene gabelförmige Lagerstellen mit sich etwa senkrecht zur Lenkradachse erstreckenden Aufnahmebohrungen ausgebildet sind, an einem Generatorträger des Airbagmoduls korrespondierend zu den Lagerstellen nach unten abgewinkelte Montagelaschen mit sich in Richtung der Lenkradachse erstreckenden Langlochausnehmungen ausgebildet oder befestigt sind und das Airbagmodul mittels in die Aufnahmebohrungen und durch die Langlochausnehmungen eingesteckter Haltestifte mit dem Lenkradskelett verbunden ist. Ein gattungsgemäßes Lenkrad ist aus der JP-A-09/18 33 50 bekannt.

Für die Befestigung eines Airbagmoduls in einem Lenkrad sind bereits zahlreiche Vorschläge gemacht worden. Werden die Lenkräder bei der Endmontage mittels einer auf das Gewindeende der Lenksäule aufgeschraubten Mutter befestigt, kann das Airbagmodul erst nach der Montage des Lenkrades eingesetzt werden, weil es den zentralen Bereich oberhalb der Lenkradnabe einnimmt, der'zum Aufschrauben der Mutter frei zugänglich bleiben muß. Will man sogenannte integrierte Airbags vorsehen, bei denen das Lenkrad zusammen mit dem fertig montierten Airbag angeliefert und auf die Lenksäule aufgesetzt wird, so muß man für eine andere Lenkradbefestigung sorgen, für die ebenfalls schon Vorschläge gemacht worden sind, die jedoch alle schwieriger zu handhaben sind, als die übliche, millionenfach bewährte Lenkradbefestigung mit einer zentralen Mutter.

Bei dieser Version kann das Airbagmodul - wie gesagt - erst montiert werden, wenn das Lenkrad auf die Lenksäule aufgesteckt und mit dieser befestigt ist. Für die Befestigung des Airbagmoduls im Lenkrad müssen dann Schraubverbindungen vorgesehen werden, deren Zugriffsmöglichkeiten aus optischen Gründen nicht auf der Oberseite des Lenkrades vorgesehen werden können. Das Einsetzen von Schrauben und die Betätigung von Schraubverbindungen von der Rückseite des Lenkrades her ist wegen der beengten Platzverhältnisse immer schwierig und zeitaufwendig. Da man im Kraftfahrzeugbau heute immer kürzere Endmontagezeiten anstrebt, werden Schraubverbindungen und insbesondere solche, die von der Rückseite des Lenkrades her betätigt werden müssen, als äußerst nachteilig angesehen.

Man hat daher auch schon versucht, Airbagmodule mittels sogenannter Snap-In- oder Clip-Verbindungen am Lenkrad zu befestigen. Es hat sich jedoch herausgestellt, daß herkömmliche Verbindungen dieser Art nicht geeignet sind, weil sie nicht in der Lage sind, die sogenannten "Schußkräfte" bei der Auslösung eines Airbags aufzunehmen oder weil diese Verbindungen bei der dynamischen Belastung ausrasten. Derartige Verbindungen stehen in Schließstellung üblicherweise unter einer gewissen Vorspannung, wodurch die Snap-In- oder Clip-Verbindung gesichert ist und unter normalen Bedingungen nicht ausrasten kann. Beim explosionsartigen Aufblasen eines Airbags werden derartige Verbindungen jedoch zunächst im Sinne einer Beseitigung der Vorspannung belastet, so daß sie die Rastvorsprünge nicht mehr sicher hintergreifen können, wenn die unmittelbar darauffolgende Belastung in Vorspannrichtung eintritt.

Soll die Airbagabdeckung zur Betätigung der Hupe benutzt werden, muß das gesamte Airbagmodul um den erforderlichen Kontaktweg im Lenkrad parallel zur Lenkradachse verschieblich angeordnet werden. Für diese Zwecke kommen Snap-In-oder Rastverbindungen nicht in Betracht, weil sich eine permanente Vorspannung dieser Verbindungen mit der erforderlichen Beweglichkeit des Airbags zum Schließen der Hupkontakte konstruktiv nicht vereinbaren läßt. Gleichwohl besteht auch für derartige Fälle das Bedürfnis, den Zeitaufwand für den Einbau des Lenkrades und des Airbags bei der Endmontage möglichst zu verkürzen und gleichzeitig den Platzbedarf für die Unterbringung des Airbags zu verringern.

Somit ergibt sich die Aufgabe, eine Möglichkeit aufzuzeigen, nach der Lenkrad und Airbagmodul unter Beibehaltung der üblichen zentralen Befestigung des Lenkrades an der Lenksäule auf möglichst zeit- und platzsparende Weise endmontiert werden können.

Zur Lösung dieser Aufgabe wird bei einem Lenkrad der eingangs genannten Art vorgeschlagen, daß am Generatorträger als Blattfedern wirkende Blechabschnitte ausgebildet oder befestigt sind, die sich im montierten Zustand endseitig auf Widerlagern am Lenkradskelett abstützen und das Airbagmodul entgegen der Hupbetätigungsrichtung vorspannen, wobei zwischen den Blechabschnitten und den Widerlagern Kunststoffelemente oder ein umlaufender Kunststoffring angeordnet sind bzw. ist und im Bereich der gabelförmigen Lagerstellen die Haltestifte als Widerlager für die Kunststoffelemente bzw. den Kunststoffring dienen.

Bei diesem Vorschlag kann das Lenkrad ohne weiteres, wie üblich, auf die Lenksäule aufgesteckt und mit dieser verschraubt werden, bevor das Airbagmodul eingebaut wird. Letzteres kann von oben in das topfartig ausgebildete Lenkrad eingesetzt und durch Haltestifte, die auf der Rückseite des Lenkrades etwa senkrecht zur Lenkradachse einsteckbar sind, befestigt werden. Durch die Verwendung von Langlochausnehmungen wird die Beweglichkeit in Richtung Lenkradachse, die zur Betätigung der Hupe erforderlich ist, ermöglicht. Zur Vorspannung des Airbagmoduls entgegen der Hupbetätigungsrichtung kann auf bekannte Lösungen zurückgegriffen werden.

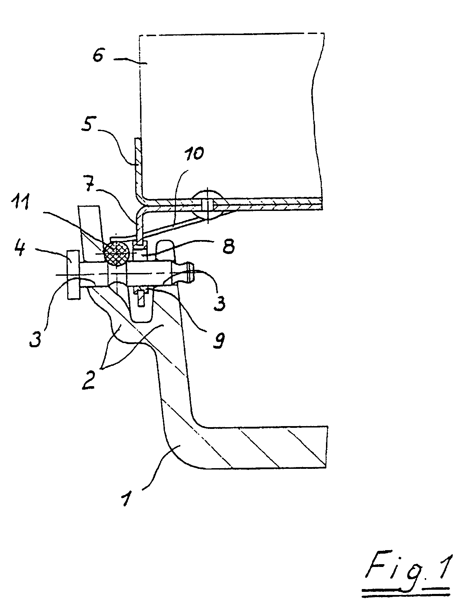

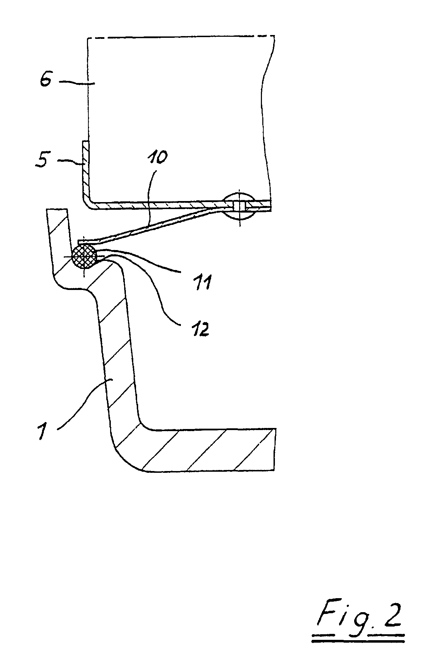

Vorteilhafte Ausgestaltungen des Erfindungsgedankens sind in den Unteransprüchen 2 bis 5 beschrieben. Weitere Einzelheiten werden anhand der in den Figuren 1 und 2 dargestellten Ausführungsbeispiele näher erläutert. Es zeigen:
Fig. 1 einen vertikalen Teilschnitt durch ein Lenkradskelett im Bereich der Befestigungsstellen; und
Fig. 2 einen vertikalen Teilschnitt durch das gleiche Lenkradskelett außerhalb der Befestigungsstellen.

Das Lenkradskelett 1 gem. Fig. 1 ist mit zwei oder mehr nach oben offenen, gabelförmigen Lagerstellen 2 ausgebildet, die, bezogen auf den Generatorträger 5 des Airbagmoduls 6, am Umfang verteilt angeordnet sind. In der dargestellten Montageendposition greift eine abgewinkelte Montagelasche 7, die am Generatorträger 5 angenietet ist, in die gabelförmige Lagerstelle 2 ein, wo sie mittels des Haltestifts 4, der sich durch die Aufnahmebohrungen 3 der gabelförmigen Lagerstelle 2 und die Langlochausnehmung 8 der Montagelasche 7 erstreckt, befestigt ist. In die Langlochausnehmung 8 ist eine Kunststoffbuchse 9 eingesetzt, um einen direkten Kontakt zwischen der Montagelasche 7 und dem Haltestift 4 zu vermeiden. Am Generatorträger 5 ist ferner ein als Blattfeder wirkender Blechabschnitt ausgebildet oder befestigt, der sich in montiertem Zustand endseitig auf einem Widerlager im Lenkradskelett abstützt. Der Blechabschnitt dient dem Aufbau einer Vorspannung entgegen der Hupbetätigungsrichtung, wodurch gleichzeitig der Haltestift 4 mit Vorspannung in den Aufnahmebohrungen 3 gehalten wird.

Aus Fig. 2 ist ersichtlich, wie das Widerlager 12 am Lenkradskelett außerhalb der Befestigungsstellen ausgebildet sein kann. Zwischen dem Widerlager 12 und dem Ende des Blechabschnitts 10 ist ein Kunststoffelement angeordnet, das entweder abschnittsweise entsprechend der Breite der Blechabschnitte ausgebildet ist oder einen umlaufenden Ring bildet. Die nicht gesondert erwähnten Bezugsziffern in Fig. 2 haben die gleiche Bedeutung wie in Fig. 1.

Aus Fig. 1 ist ersichtlich, daß im Bereich der Befestigungsstellen der Haltestift 4 als Widerlager für das Kunststoffelement 11 dient. Am Haltestift 4 sind zwei außen umlaufende teilkreisförmige Ausnehmungen ausgebildet, die zusammen mit dem im Querschnitt kreisförmig ausgebildeten Kunststoffelement dafür sorgen, daß der Haltestift 4 in zwei definierten Positionen gegen unbeabsichtigtes axiales Verschieben gesichert ist. In der dargestellten Montageendposition drückt der als Blattfeder wirkende Blechabschnitt 10 das Kunststoffelement in die kopfseitige Ausnehmung des Haltestifts 4 ein. Wird der Haltestift zur Demontage des Airbagmoduls axial herausgezogen, rastet das Kunststoffelement 11 in die endseitige Ausnehmung des Haltestifts 4 ein, so daß er auch in dieser Position gesichert ist. Beim Herausziehen des Haltestiftes 4 aus der Montageendstellung wird das Kunststoffelement 11 unter elastischer Verformung des Blechabschnitts 10 leicht nach oben verschoben, bis der Haltestift 4 so weit herausgezogen ist, daß er die Langlochausnehmung 8 freigibt. Sind alle am Umfang verteilt angeordneten Haltestifte 4 so weit herausgezogen, kann das Airbagmodul aus dem Lenkrad entnommen werden. Beim Einsetzen des Airbagmoduls müssen die als Blattfedern wirkenden Blechabschnitte 10 so weit elastisch verformt werden, daß die Haltestifte 4 wieder axial durch die Langlochausnehmungen 8 hindurchgeschoben werden können. In der gezeigten Montageendstellung bewirkt der Blechabschnitt 10 einmal die erforderliche Vorspannung des Airbagmoduls 6, entgegen der Hupbetätigungsrichtung, zum anderen die axiale Sicherung des Haltestiftes über das zwischengelegte Kunststoffelement 11. Unter Verwendung der erfindungsgemäßen konstruktiven Elemente läßt sich ein Airbagmodul in der geforderten kurzen Endmontagezeit in einem bereits eingebauten Lenkrad befestigen, das in üblicher Weise auf die Lenksäule aufgesteckt und über eine zentral aufgesetzte Mutter mit der Lenksäule verbunden ist. Die Haltestifte 4 sind dabei in einer herausgezogenen Position gehalten und müssen nach dem Einsetzen des Airbagmoduls nur noch eingeschoben werden.

## Patentansprüche

1. Lenkrad mit einem aus Nabe, Speichen und Lenkradkranz bestehenden Lenkradskelett (1) sowie mit einem darin untergebrachten Airbagmodul (6), das zur Betätigung der Hupe gegen eine Rückstellkraft um den erforderlichen Kontaktweg parallel zur Lenkradachse verschieblich angeordnet ist, wobei im Lenkradskelett (1) mindestens zwei nach oben offene gabelförmige Lagerstellen (2) mit sich etwa senkrecht zur Lenkradachse erstreckenden Aufnahmebohrungen (3) ausgebildet sind, an einem Generatorträger (5) des Airbagmoduls (6) korrespondierend zu den Lagerstellen (2) nach unten abgewinkelte Montagelaschen (7) mit sich in Richtung der Lenkradachse erstreckenden Langlochausnehmungen (8) ausgebildet oder befestigt sind, das Airbagmodul (6) mittels in die Aufnahmebohrungen (3) und durch die Langlochausnehmungen (8) eingesteckter Haltestifte (4) mit dem Lenkradskelett (1) verbunden ist, **dadurch gekennzeichnet, daß** am Generatorträger (5) als Blattfedern wirkende Blechabschnitte (10) ausgebildet oder befestigt sind, die sich im montierten Zustand endseitig auf Widerlagern (12) am Lenkradskelett (1) abstützen und das Airbagmodul (6) entgegen der Hupbetätigungsrichtung vorspannen, wobei zwischen den Blechabschnitten (10) und den Widerlagern (12) Kunststoffelemente (11) oder ein umlaufender Kunststoffring angeordnet sind bzw. ist und im Bereich der gabelförmigen Lagerstellen (2) die Haltestifte (4) als Widerlager für die Kunststoffelemente (11) bzw. den Kunststoffring dienen.

2. Lenkrad nach Anspruch 1, **dadurch gekennzeichnet, daß** in die Langlochausnehmungen (8) Kunststoffbuchsen (9) eingesetzt sind.

3. Lenkrad nach Anspruch 1 oder 2, **dadurch gekennzeichnet, daß** die Haltestifte (4) mittels der Kunststoffelemente (11) bzw. des Kunststoffrings und der Blechabschnitte (10) in der Montageendstellung gesichert sind.

4. Lenkrad nach einem der vorhergehenden Ansprüche, **dadurch gekennzeichnet, daß** die Kunststoffelemente (11) bzw. der Kunststoffring an den Blechabschnitten (10) befestigt sind bzw. ist.

5. Lenkrad nach einem der vorhergehenden Ansprüche, **dadurch gekennzeichnet, daß** die Haltestifte (4) unter elastischer Verformung der Blechabschnitte (10) aus der Montageendstellung entfernbar sind.

## Claims

1. A steering wheel comprising a steering wheel skeleton (1) consisting of a hub, spokes and a steering wheel rim, and an airbag module (6) housed in the skeleton and which, for actuation of the horn, is arranged displaceably against a return force across the required contact path parallel to the steering wheel axis, at least two upwardly open fork-like support sites (2) having locating holes (3) extending approximately perpendicularly to the steering wheel axis being embodied in the steering wheel skeleton (1), downwardly angled mounting shackles (7) having elongated holes (8) extending in the direction of the steering wheel axis being embodied on or attached to a generator support (5) of the airbag module (6) in a way corresponding with the support sites (2), and the airbag module (6) being joined to the steering wheel skeleton (1) by means of retaining pins (4) inserted in the locating holes (3) and through the elongated holes (8), **characterized in that** sheet sections (10) acting as leaf springs are embodied on or attached to the generator support (5), which when in the assembled state, bear, at their end sides, on abutments (12) at the steering wheel skeleton (1) and pretension the air bag module (6) against the horn actuation direction, plastics elements (11) or a surrounding plastics ring being arranged between the sheet sections (10) and the abutments (12), and in the area of the fork-like support sites (2) the retaining pins (4) serve as an abutment for the plastics elements (11) and the plastic ring, respectively.

2. The steering wheel according to claim 1, **characterized in that** plastics bushes (9) are inserted in the elongated holes (8).

3. The steering wheel according to claim 1 or 2, **characterized in that** the retaining pins (4) are locked in place in the final assembly position by means of the plastics elements (11) and the plastics ring, respectively, and the sheet sections (10).

4. The steering wheel according to any of the preceding claims, **characterized in that** the plastics elements (11) and the plastics ring, respectively, are/is mounted on the sheet sections (10).

5. The steering wheel according to any of the preceding claims, **characterized in that** the retaining pins (4) can be removed from the final assembly position with elastic deformation of the sheet sections (10).

## Revendications

1. Volant comportant une armature de volant (1) constituée par un moyeu, des rayons et une couronne de volant, ainsi qu'un module de coussin à gaz (6) logé dans l'armature de volant et qui est agencé de manière à pouvoir être déplacé contre une force de retour sur la course de contact requise, parallèlement à l'axe du volant, pour actionner le klaxon, au moins deux points d'appui (2) en forme de fourches, ouverts vers le haut étant réalisés dans l'armature du volant (1), avec des perçages de réception (3) s'étendant approximativement perpendiculairement à l'axe du volant, des pattes de montage (7) coudées vers le bas avec des évidements à trou oblong (8) s'étendant en direction de l'axe du volant étant réalisées ou fixées sur un support de générateur (5) du module de coussin à gaz (6) de manière à correspondre aux points d'appui (2), et le module de coussin à gaz (6) étant relié à l'armature de volant (1) au moyen de goupilles de retenue (4) enfichées dans les perçages de réception et à travers les évidements à trou oblong (8), **caractérisé en ce que** sur le support de générateur (5) sont réalisées ou fixées des portions de tôle (10) servant de ressorts à lames qui, à l'état monté, prennent appui aux extrémités sur des butées (12) situées sur l'armature de volant (1) et précontraignent le module de coussin à gaz (6) à l'encontre de la direction d'actionnement du klaxon, des éléments en matière plastique (11) ou une bague en matière plastique périphérique, étant respectivement agencés entre les portions de tôle (10) et les butées (12), et dans la zone des points d'appui (2) en forme de fourches, les goupilles de retenue (4) servant de butée pour les éléments en matière plastique (11) ou pour la bague en matière plastique, respectivement.

2. Volant selon la revendication 1, **caractérisé en ce que** des douilles en matière plastique (9) sont insérées dans les évidements à trou oblong.

3. Volant selon la revendication 1 ou 2, **caractérisé en ce que** les goupilles de retenue (4) sont bloquées dans la position terminale de montage au moyen des éléments en matière plastique (11) ou de la bague en matière plastique, respectivement, et des portions de tôle (10).

4. Volant selon l'une des revendications précédentes, **caractérisé en ce que** les éléments en matière plastique (11) ou la bague en matière plastique, respectivement, sont fixés sur les portions de tôle (10).

5. Volant selon l'une des revendications précédentes, **caractérisé en ce que** les goupilles de retenue (4) peuvent être enlevées de la position terminale de montage en déformant élastiquement les portions de tôle (10).
